# EUROPÄISCHE PATENTSCHRIFT

(11) **EP 2 829 438 B1**
(45) Veröffentlichungstag und Bekanntmachung des Hinweises auf die Patenterteilung: **01.01.2020**
(21) Anmeldenummer: 14153252.3
(22) Anmeldetag: 30.01.2014
(51) Int. Cl.: B60P 1/04, B60G 17/017

(54) **Kipperfahrzeug**
Tipping vehicle
Véhicule à benne basculante

(30) Priorität: 14.02.2013 DE 102013202415
(43) Veröffentlichungstag der Anmeldung: 28.01.2015
(73) Patentinhaber: Franz Xaver Meiller Fahrzeug- und Maschinenfabrik-GmbH & Co KG, 80997 München (DE)
(72) Erfinder: Hammers, Peter, 82178 Puchheim (DE)
(74) Vertreter: Weickmann & Weickmann PartmbB

(56) Entgegenhaltungen:
- EP-A2- 2 781 404
- WO-A1-2007/013990
- AU-A4- 2009 100 034
- DE-U1- 20 217 027
- FR-A1- 2 865 168
- GB-A- 2 046 957
- GB-A- 2 448 691
- US-A- 3 921 128

## Beschreibung

Die Erfindung betrifft ein Kipperfahrzeug als Sattelzug aus Zugmaschine und Sattelanhänger, der eine Kippbrücke und einen mittels einer Steuereinrichtung steuerbaren Kippmechanismus zum reversiblen Kippen der Kippbrücke aus einer Fahrtgrundstellung in eine angehobene Kippstellung um eine Kippachse umfasst, wobei eine signalübertragend mit der Steuereinrichtung in Verbindung stehende Ausrichtungssensoranordnung zur Erfassung der Längsausrichtung der Zugmaschine relativ zur Längsausrichtung des Anhängers vorgesehen ist.

Es sind Lastkraftwagen, insbesondere Sattelzüge, auch Kippsattelzüge, bekannt, die mit einem sogenannten Roll-Stability-Support-(RSS)-System ausgestattet sind. Insbesondere der Sattelanhänger (Auflieger) eines Sattelzugs kann in fahrdynamisch kritischen Situationen leicht seitlich umkippen, ohne dass der Fahrer rechtzeitig eingreifen und Gegenmaßnahmen einleiten könnte. Solch fahrdynamisch kritische Situationen können z.B. bei Kurvenfahrten mit kleinem Kurvenradius oder abrupten Ausweichmanövern vorkommen. Dabei können Querbeschleunigungen auftreten, welche den Sattelanhänger um eine in seiner Längsrichtung verlaufende Achse herum umkippen lassen, was zu schweren Unfällen führt. Das RSS-System dient dazu, derartige fahrdynamisch kritische Situationen rechtzeitig zu erfassen und kompensierende Gegenmaßnahmen einzuleiten. Bekannte RSS-Systeme sind üblicherweise in elektronischen Bremssystemen EBS integriert und werten Informationen wie Beladungs-, Raddrehzahl- und Querbeschleunigungsdaten betreffender Sensoren aus, um die Umkipptendenz von Fahrzeugen bzw. Anhängern zu erkennen und durch gezieltes Einbremsen kompensierend einzugreifen.

Das RSS-System kann jedoch auch in statischen Situationen Signale liefern, so können z.B. vermittels Querbeschleunigungssensoren Querkräfte, die auf das Fahrzeug wirken, erfasst werden. Solche Querkräfte wirken auf das Fahrzeug, wenn es auf abschüssigem Gelände quer zum Geländegefälle steht und dabei Seitenneigung aufweist.

Bei einem mit Seitenneigung auf abschüssigem Gelände stehenden Kipperfahrzeug steigt das Risiko des seitlichen Umkippens stark an, wenn die mit Last beladende Kippbrücke um die Kippachse zur angehobenen Kippstellung bewegt wird. Dabei bewegt sich der Schwerpunkt des Fahrzeugs nach oben und in Richtung des Seitenneigungsgefälles, so dass ein gefährliches Seitenkippmoment entstehen kann, welches das Umkippen des Fahrzeugs zur Folgen haben kann.

Die vorliegende Erfindung befasst sich mit der Problematik, dass bei einem Kipperfahrzeug der eingangs genannten Art ein kritischer Zustand betreffend die Standstabilität des Kipperfahrzeugs bereits auf horizontalem Gelände eintreten kann, wenn schon ein kritisch großer Winkel zwischen der Längsachse der Zugmaschine und der Längsachse des Sattelanhängers entstehen kann, wenn die mit insbesondere mit Ladung belastete Kippbrücke bei einem betriebsmäßigen Kippvorgang in Richtung zur angehobenen Kippstellung um die Kippachse bewegt wird.

Aus der WO 2007/013990 A1 ist ein Gelenkfahrzeug mit einer heckseitigen Tandemachsanordnung und einem Stabilisierungssystem zum Unterdrücken von Kipptendenzen des Fahrzeugs bekannt, wobei das Stabilisierungssystem ein Sensorsystem zur Überwachung des Fahrzeugzustandes aufweist, welches insbesondere auf den Einschlagwinkel, d.h. den Winkel der Längsausrichtung des vorderen Fahrzeugteils relativ zur Längsausrichtung des heckseitigen Fahrzeugteils, etwa bei Kurvenfahrt, überwacht. Bei Überschreiten eines bestimmten Wertes des Einschlagwinkels dämpft das Stabilisierungssystem die Gelenkigkeit der Tandemachsanordnung, um das Fahrzeug zu stabilisieren. Dies kann gemäß einer Variante des Stabilisierungssystems ferner zusätzlich in Abhängigkeit von der Fahrzeuggeschwindigkeit erfolgen.

In der GB 2 448 691 A ist ein Kipperfahrzeug mit einer Kippbrücke und einem mittels einer Steuereinrichtung steuerbaren Kippmechanismus zum Kippen der Kippbrücke offenbart. Eine Sensoranordnung zur Erfassung einer Seitenneigung des Fahrzeugs steht signalübertragend mit der Steuereinrichtung in Verbindung. Die Steuereinrichtung ist dazu eingerichtet, die Kippmöglichkeiten der Kippbrücke abhängig vom Signalisierungszustand der Seitenneigungs-Sensoranordnung zu beschränken.

Auch die AU 2009 100 034 A4 offenbart ein solches Kipperfahrzeug mit einer Kippbrücke und mit einer mit einer betreffenden Steuereinrichtung signalübertragend in Verbindung stehenden Sensoranordnung zur Erfassung einer Seitenneigung des Kipperfahrzeugs. Die Steuereinrichtung ist dazu eingerichtet, die Kippmöglichkeiten der Kippbrücke abhängig vom Signalisierungszustand der Sensoranordnung zu beschränken, wobei sie abhängig von der Seitenneigung des Kipperfahrzeugs einen maximal zulässigen Kippwinkel der Kippbrücke definiert und bei Erreichen des betreffenden maximal zulässigen Kippwinkels ein Warnsignal abgibt bzw. ein weiteres Kippen über den maximal zulässigen Kippwinkel hinaus unterbindet.

Aufgabe der vorliegenden Erfindung ist es, ein Kipperfahrzeug der Eingangs genannten Art sicherer zu gestalten und die Umkippgefahr bei betriebsmäßigen Kippvorgängen zu reduzieren.

Zur Lösung dieser Aufgabe ist die Steuereinrichtung des Kipperfahrzeugs gemäß Anspruch 1 dazu eingerichtet, abhängig vom Signalisierungszustand der Ausrichtungssensoranordnung ein Warnsignal abzugeben oder/und die Kippmöglichkeiten der Kippbrücke zu beschränken.

Die Ausrichtungssensoranordnung kann z.B. eine Winkelgeberanordnung im Sattelkupplungsbereich sein, die den Winkel zwischen der Längsachse der Zugmaschine und der Längsachse des Sattelanhängers erfasst. Befinden sich Zugmaschine und Sattelanhänger in ihrer Geradeaus-Streckstellung, so weisen sie die gleiche Längsausrichtung auf, und der in Draufsichtsprojektion zu messende Winkel zwischen ihren Längsachsen hat den Wert 0. Selbstverständlich könnte in einer Weiterbildung der Erfindung auch ein Knickwinkel zwischen Zugmaschine und Sattelanhänger in der Vertikalprojektion, also von der Seite gesehen, erfasst und berücksichtigt werden.

Um ein Umkippen des Kipperfahrzeugs, insbesondere des Sattelanhängers bei einem zu großen Winkel zwischen den Längsausrichtungen der Zugmaschine und des Sattelanhängers zu vermeiden, ist die Steuereinrichtung vorzugsweise dazu eingerichtet, einen Kippvorgang zu unterbinden/zu beschränken, wenn die Ausrichtungssensoranordnung ein Überschreiten eines Grenzwertes des Winkels zwischen der Längsachse der Zugmaschine und der Längsachse des Sattelanhängers signalisiert.

Alternativ kann bei einem betriebsmäßigen Kippvorgang der Kippwinkel der Kippbrücke relativ zur Fahrtgrundstellung kontinuierlich oder in Stufen je mehr zu beschränken sein je größer der von der Ausrichtungssensoranordnung signalisierte Winkel zwischen der Längsachse der Zugmaschine und der Längsachse des Sattelanhängers ist.

Gemäß einer bevorzugten Weiterbildung der Erfindung ist es vorgesehen, dass eine Sensoranordnung zur Erfassung und Signalisierung einer Seitenneigung des Kipperfahrzeugs signalübertragend mit der Steuereinrichtung in Verbindung steht, wobei die Steuereinrichtung dazu eingerichtet ist, die Kippmöglichkeiten der Kippbrücke abhängig vom Signalisierungszustand der Sensoranordnung zu beschränken.

Mit Seitenneigung ist eine um eine Längsachse des Kipperfahrzeugs geneigte Position des Kipperfahrzeugs gemeint. Es ist im Rahmen der Erfindung auch möglich, dass bei einem Sattelzug die Sensoranordnung die Seitenneigung des Sattelanhängers überwacht und signalisiert, wobei die elektronische Steuereinrichtung des Kippsattelzugs die Kippmöglichkeiten der auf dem Sattelanhänger angeordneten Kippbrücke abhängig vom Signalisierungszustand der Sensoranordnung beschränken kann.

Gemäß einer einfach und kostengünstig zu installierenden Variante der Erfindung ist die elektronische Steuereinrichtung dazu eingerichtet und programmiert, das betriebsmäßige Kippen der Kippbrücke in Richtung zur angehobenen Kippstellung um die Kippachse zu unterbinden, wenn die Sensoranordnung das Überschreiten eines Grenzwertes der Seitenneigung des Kipperfahrzeugs signalisiert. Der Begriff "Beschränken" soll somit auch das vollständige Unterbinden des betriebsmäßigen Kippvorgangs bei zu starker Seitenneigung des Kipperfahrzeugs umfassen.

In einer weniger bevorzugten Variante der Erfindung erfolgt in dem kritischen Fall der zu starken Seitenneigung des Kipperfahrzeugs lediglich ein optisches und/oder akustisches Warnsignal, das den Fahrer des Kipperfahrzeugs veranlasst den Kippvorgang zu stoppen. Aber auch das automatische Unterbinden eines Kippvorgangs kann von einem akustischen oder/und optischen Warnsignal an den Fahrer begleitet sein. Hierzu kann z.B. im Fahrerhaus eine entsprechende Signalisierungseinrichtung vorgesehen sein.

Eine andere Ausführungsform des Kipperfahrzeugs nach der Erfindung ist dadurch gekennzeichnet, dass die Steuereinrichtung dazu eingerichtet ist, bei einem Kippvorgang den Kippwinkel der Kippbrücke relativ zur Fahrtgrundstellung um die Kippachse kontinuierlich oder in Stufen je mehr zu beschränken je größer die von der Sensoranordnung signalisierte Seitenneigung des Kipperfahrzeugs ist. Bei relativ geringer Seitenneigung kann dann bis zu einem entsprechend großen Kippwinkel ein Kippvorgang zugelassen werden. Ganz allgemein kann im Rahmen der Erfindung auch eine mit der Steuereinrichtung signalübertragend in Verbindung stehende Sensoranordnung zur Erfassung des Kippbrückengewichts mit Last vorgesehen sein, so dass zusätzlich zur Seitenneigung auch die Last in die Bestimmung der Umkippgefahr einbezogen wird.

Gemäß einer besonders bevorzugten Weiterbildung der Erfindung umfasst das Kipperfahrzeug ein elektronisches Bremssystem EBS mit einem Roll-Stability-Support-System RSS, das dazu eingerichtet ist, während der Fahrt einem seitlichen Kippen des Kipperfahrzeugs durch gesteuertes Bremsen entgegenzuwirken, wobei die Sensoranordnung Sensoren des RSS umfasst. Dies können Seitenbeschleunigungssensoren bzw. Seitenkraftsensoren sein wie ggf. auch Lastsensoren. Ein ohnehin mit EBS und RSS ausgestattetes Kipperfahrzeug kann somit auf sehr einfache Weise zu einem erfindungsgemäßen Kipperfahrzeug umgerüstet werden, indem die Kippsteuerungssoftware entsprechend angepasst wird, so dass sie einen betriebsmäßigen Kippvorgang in der oben beschriebenen Weise unterbindet/beschränkt, wenn das Kipperfahrzeug Seitenneigung aufweist.

Bei vielen Kipperfahrzeugen umfasst der Kippmechanismus ein steuerbares Magnetventil für die Hub- und Senksteuerung der Kippbrücke, wobei gemäß einer Ausführungsform der Erfindung die Steuereinrichtung dazu eingerichtet ist, das Magnetventil eines solchen Kipperfahrzeugs abhängig vom Signalisierungszustand der Sensoranordnung anzusteuern.

Bei Kipperfahrzeugen mit pneumatischer Ventilansteuerung kommt insbesondere ein Eingriff in das Pneumatiksystem in Frage, um die betriebsmäßigen Kippmöglichkeiten bei Seitenneigung des Kipperfahrzeugs zu unterbinden/beschränken.

Ein Erfindungsaspekt ist das Vorsehen eines mittels der elektronischen Steuereinrichtung steuerbaren On-Board-Displays in dem Kipperfahrzeug zur insbesondere bildhaften Darstellung von Fahrzeuglagezuständen, wie Seitenneigung des Kipperfahrzeugs, Vorwärts-Rückwärtsneigung des Kipperfahrzeugs, Winkel zwischen Längsachse der Zugmaschine und Längsachse des Anhängers bei einem Kipperlastzug, insbesondere Kippsattelzug. Das On-Board-Display kann Bestandteil eines Fahrzeuginformationssystems sein, welches dem Fahrer anhand von Piktogrammen oder graphisch dargestellten Bewegungsabläufen Fahrzeuglagezustände auf dem On-Board-Display anzeigt, insbesondere wenn diese Fahrzeuglagezustände zu kritischen Situationen führen könnten, die Gegenmaßnahmen erfordern könnten, also etwa sofortiges Stoppen eines Kippvorgangs der Kippbrücke um die Kippachse. Dieses Fahrzeuginformationssystem kann Informationen der Sensoranordnungen des Kipperfahrzeugs mittels der Steuereinrichtung auswerten und/oder ggf. Zusatzinformationen erhalten, z.B. von GPS-On-Board-Navigationssystemen und/oder On-Board-Kameras. Das besprochene Fahrzeuginformationssytem kann auch akustische Signalgeber umfassen, welche bei Gefahr des Eintretens eines kritischen Lagezustandes des Fahrzeugs den Fahrer darauf aufmerksam macht, so dass er auf dem On-Board-Display dann sogleich sehen kann, um welchen Fahrzeuglagezustand es sich handelt.

Die Erfindung wird nachstehend unter Bezugnahme auf die Zeichnungen erläutert.
- Figur 1 und Figur 2: zeigen in einer schematischen Darstellung ein Kippsattelfahrzeug mit einer Kippbrücke in Fahrtgrundstellung (Figur 1) und in angehobener Kippstellung (Figur 2).
- Figur 3: zeigt in schematischer Darstellung einen entsprechenden Kippsattelanhänger mit angehobener Kippbrücke in Vorderansicht auf horizontalem Boden.
- Figur 4: zeigt den Kippsattelanhänger in Vorderansicht mit angehobener Kippbrücke auf schräg abfallendem Gelände, wobei die X-Durchstreichung auf einen unzulässigen Zustand des Kipperfahrzeugs, nämlich Hochfahren der Kippbrücke bei Seitenneigung des Kipperfahrzeugs, hinweist.
- Figur 5: zeigt in schematischer Darstellung ein Kippsattelfahrzeug entsprechend Figur 1 - Figur 4 mit angehobener Kippbrücke in Draufsicht, wobei der Kippsattelanhänger in Flucht mit der Zugmaschine in Streckstellung ausgerichtet ist.
- Figur 6: zeigt das Kippsattelfahrzeug aus Figur 5 in Draufsicht mit angehobener Kippbrücke, wobei die Längsausrichtung des Sattelanhängers nicht mehr mit der Längsausrichtung der Zugmaschine übereinstimmt, so dass sich zwischen den Längsachsen ein Winkel ungleich 0 in Draufsichtsposition gebildet hat, wobei die Durchstreichung in Figur 6 auf einen unzulässigen Fahrzeugzustand hinweisen soll, nämlich darauf, dass bei zu starker Abweichung der Längsausrichtung des Sattelanhängers von der Längsausrichtung der Zugmaschine die Kippbrücke in ihrer angehobenen Kippstellung ist.

Wie allgemein aus dem Stand der Technik bekannt, gibt es in diversen Ausgestaltungen Kippsattelfahrzeuge (Kippsattelzüge) der in den Figuren gezeigten Art. Die Zugmaschine 3 stützt den mit Hinterrädern ausgestatteten Sattelanhänger (Auflieger) 5 in dessen vorderen Bereich ab, wobei eine Sattelkupplung 7 eine gelenkige Verbindung zwischen Zugmaschine und Satellanhänger 5 herstellt, die für Kurvenfahrten ein Verschwenken der Zugmaschine 3 relativ zu dem Sattelanhänger 5 um eine vertikale Achse 9 (Königszapfenachse der Sattelkupplung 7) ermöglicht.

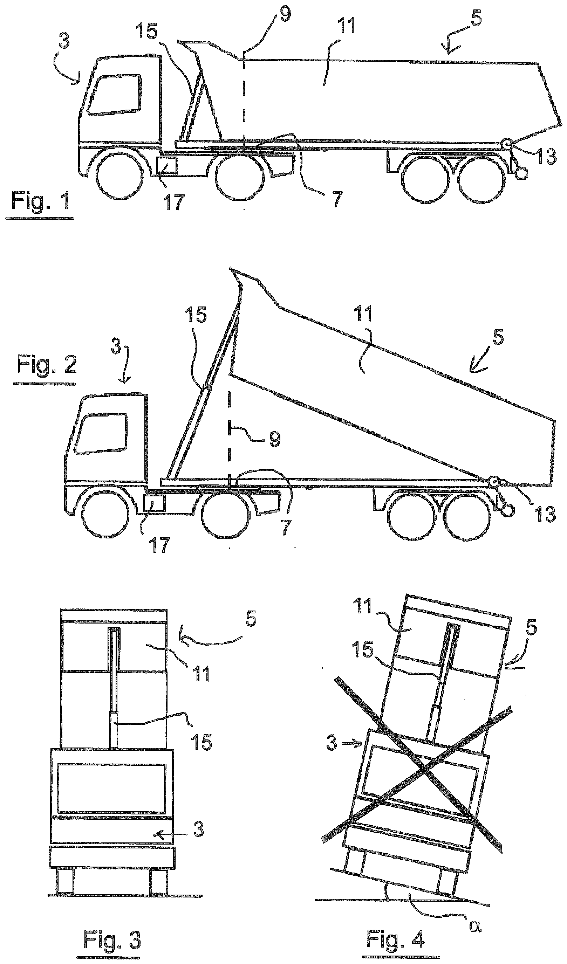

Eine Kippbrücke 11 ist als um eine heckseitige Kippachse 13 kippbarer Lastenbehälter auf dem Sattelanhänger 5 vorgesehen. Sie kann aus der in Figur 1 dargestellten Fahrtgrundstellung heraus mittels einer Hydraulikanlage in die angehobene Kippstellung gemäß Figur 2 angehoben werden. Die Hydraulikanlage umfasst den schematisch dargestellten hydraulischen Teleskopzylinder 15, der zum Anheben und Absenken der Kippbrücke 11 teleskopisch ausgefahren bzw. eingezogen werden kann. Das Kipperfahrzeug umfasst eine Steuereinrichtung 17, insbesondere auch für die Steuerung des Kippmechanismus zum reversiblen Kippen der Kippbrücke 11 um die Kippachse 13. Die Steuereinrichtung 17 umfasst im Beispielsfall auch ein elektronisches Bremssystem EBS mit einem integrierten Roll-Stability-Support-System RSS, welches im Einzelnen nicht dargestellte Sensoren zur Erfassung einer Kipptendenz des Sattelfahrzeugs, insbesondere des Sattelanhängers 11, umfasst. Das RSS-System weist eine Sensoranordnung auf, die auf Seitenkräfte anspricht, welche im Falle der Seitenneigung des Fahrzeugs auf den Kippsattelanhänger 11 wirken. Die Informationen dieser Sensoranordnung werden von der Steuereinrichtung 17 verarbeitet, um festzustellen, ob das Fahrzeug eine Seitenneigung (vgl. Figur 4) aufweist. Ist der Seitenneigungswinkel α größer als ein vorbestimmter Grenzwertwinkel, so unterbindet die Steuereinrichtung das Kippen der Kippbrücke 11 um die Kippachse 13 in Richtung zur angehobenen Kippstellung, damit der in Figur 4 angedeutete unzulässige Fahrzeugzustand nicht auftreten kann. Zusätzlich zu dem Seitenneigungswinkel α kann die Steuereinrichtung auch Informationen von Lastsensoren verarbeiten, welche Hinweise auf das Gewicht der beladenen Kippbrücke signalisieren. Der Grenzwert des Seitenneigungswinkels kann dann gemäß einer Variante der Erfindung abhängig vom Lastzustand der Kippbrücke moduliert werden.

Das gezeigte Ausführungsbeispiel der Erfindung schafft somit ein größeres Maß an Sicherheit für Kipperfahrzeuge, indem verhindert wird, dass bei übermäßiger Seitenneigung des Fahrzeugs die Kippbrücke um die Kippachse angehoben wird.

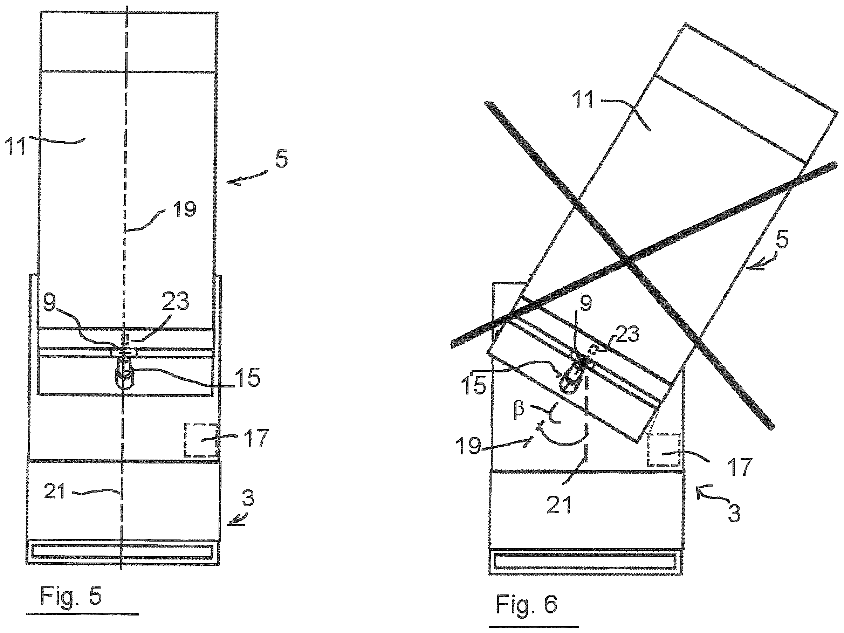

In den Draufsichtsdarstellungen des Kippsattelfahrzeugs gemäß Figur 5 und Figur 6 ist vorausgesetzt, dass das Kipperfahrzeug auf im Wesentlichen horizontalem Boden abgestellt ist, was jedoch keinesfalls in irgendeiner Weise beschränkend gemeint ist, sondern nur die Erläuterungen vereinfachen soll. Die Längsachse 19 des Sattelanhängers 5 erstreckt sich in Figur 5 parallel zur Längsachse 21 der Zugmaschine 3, so dass sich das Fahrzeug in der normalen Geradeaus-Streckstellung befindet. In dieser Stellung ist auf horizontalem Boden das Kippen der Kippbrücke um die Kippachse 13 zulässig. Bei starker Abweichung der Ausrichtung der Längsachse 19 des Sattelanhängers 5 von der Ausrichtung der Längsachse 21 der Zugmaschine 3, wie dies in der Draufsichtsprojektion anhand des Winkels β in Figur 6 zu sehen ist, soll ein Kippvorgang der Kippbrücke 11 um die Kippachse 13 nicht vorgenommen werden können. Gemäß der Erfindung wird eine solche Ausrichtungsabweichung mittels einer Ausrichtungssensoranordnung 23 überwacht. Hierbei handelt es sich vorzugsweise um einen Winkelgeber 23, der das Maß des Verschwenkens der Zugmaschine 3 relativ zu dem Sattelanhänger 5 um die Vertikalachse 9 erfasst. Die Steuereinrichtung 17 ist dazu eingerichtet, das Kippen der Kippbrücke 11 um die Kippachse 13 zu unterbinden, wenn der so erfasste Winkel β einen Grenzwertwinkel überschreitet.

Bei dem Ausführungsbeispiel gemäß den Figuren 1 - 6 überwacht die Steuerungseinrichtung 17 sowohl die Seitenneigung des Fahrzeugs als auch die Abweichung der Längsausrichtung der Zugmaschine 3 relativ zur Längsausrichtung des Sattelanhängers 5, um das Eintreten kritischer Fahrzeugzustände zu überwachen und im Gefahrenfalle einen Kippvorgang der Kippbrücke 11 um die Kippachse 13 zu unterbinden.

## Patentansprüche

1. Kipperfahrzeug als Sattelzug aus Zugmaschine (3) und Sattelanhänger (5), der eine Kippbrücke (11) und einen mittels einer Steuereinrichtung (17) steuerbaren Kippmechanismus zum reversiblen Kippen der Kippbrücke (11) aus einer Fahrtgrundstellung in eine angehobene Kippstellung um eine Kippachse (13) umfasst, **gekennzeichnet durch** eine signalübertragend mit der Steuereinrichtung (17) in Verbindung stehenden Ausrichtungssensoranordnung (23) zur Erfassung der Längsausrichtung der Zugmaschine (3) relativ zur Längsausrichtung des Anhängers (5), wobei die Steuereinrichtung (17) dazu eingerichtet ist, abhängig vom Signalisierungszustand der Ausrichtungssensoranordnung (23) ein Warnsignal abzugeben oder/und die Kippmöglichkeiten der Kippbrücke (11) zu beschränken.

2. Kipperfahrzeug nach Anspruch 1, **dadurch gekennzeichnet, dass** eine mit der Steuereinrichtung (17) signalübertragend in Verbindung stehenden Sensoranordnung zur Erfassung und Signalisierung einer Seitenneigung des Kipperfahrzeugs vorgesehen ist, wobei die Steuereinrichtung (17) dazu eingerichtet ist, die Kippmöglichkeiten der Kippbrücke (11) abhängig vom Signalisierungszustand der Sensoranordnung zu beschränken.

3. Kipperfahrzeug nach Anspruch 2, **dadurch gekennzeichnet, dass** die Steuereinrichtung (17) dazu eingerichtet ist, das Kippen der Kippbrücke (11) in Richtung zur angehobenen Kippstellung zu unterbinden, wenn die Sensoranordnung das Überschreiten eines Grenzwertes der Seitenneigung des Kipperfahrzeugs signalisiert.

4. Kipperfahrzeug nach Anspruch 2 oder 3, **dadurch gekennzeichnet, dass** die Steuereinrichtung (17) dazu eingerichtet ist, bei einem Kippvorgang um die Kippachse (13) den Kippwinkel der Kippbrücke relativ zur Fahrtgrundstellung kontinuierlich oder in Stufen je mehr zu beschränken je größer die von der Sensoranordnung signalisierte Seitenneigung des Kipperfahrzeugs ist.

5. Kipperfahrzeug nach einem der Ansprüche 2 bis 4, **dadurch gekennzeichnet, dass** es ein elektronischen Bremssystem EBS mit einem Roll Stability Support System RSS umfasst, das dazu eingerichtet ist, während der Fahrt einem seitlichen Kippen des Kipperfahrzeugs durch gesteuertes Bremsen entgegenzuwirken, wobei die Sensoranordnung Sensoren des RSS umfasst.

6. Kipperfahrzeug nach einem der Ansprüche 2 bis 5, **dadurch gekennzeichnet, dass** der Kippmechanismus ein Magnetventil umfasst für die Hub- und Senksteuerung der Kippbrücke und dass die Steuereinrichtung (17) dazu eingerichtet ist, das Magnetventil abhängig vom Signalisierungszustand der Sensoranordnung anzusteuern.

7. Kipperfahrzeug nach einem der vorhergehenden Ansprüche, **dadurch gekennzeichnet, dass** die Steuereinrichtung (17) dazu eingerichtet ist, das Kippen der Kippbrücke (11) in Richtung zur angehobenen Kippstellung zu unterbinden, wenn die Ausrichtungssensoranordnung (23) das Überschreiten eines Grenzwertes eines Winkels (13) zwischen einer Längsachse (21) der Zugmaschine (3) und einer Längsachse (19) des Anhängers (5) signalisiert.

8. Kipperfahrzeug nach einem der vorhergehenden Ansprüche, **dadurch gekennzeichnet, dass** die Steuereinrichtung (17) dazu eingerichtet ist, bei einem Kippvorgang um die Kippachse (13) den Kippwinkel der Kippbrücke (11) relativ zur Fahrtgrundstellung kontinuierlich oder in Stufen je mehr zu beschränken je größer der von Ausrichtungssensoranordnung (23) signalisierte Winkel zwischen der Längsachse (21) der Zugmaschine (3) und der Längsachse (19) des Anhängers (5) ist.

9. Kipperfahrzeug nach einem der vorhergehenden Ansprüche, **dadurch gekennzeichnet, dass** es ein mittels der Steuereinrichtung (17) steuerbares on-board-display zur insbesondere bildhaften Darstellung von Fahrzeuglagezuständen, wie Seitenneigung des Kipperfahrzeugs, Vorwärts-Rückwärtsneigung des Kipperfahrzeugs, Winkel zwischen Längsachse der Zugmaschine und Längsachse des Anhängers bei einem Kipperlastzug.

## Claims

1. Tipping vehicle as an articulated lorry consisting of a tractor unit (3) and a semitrailer (5), comprising a tipping body (11) and a tipping mechanism, which can be controlled by means of a control device (17), for reversibly tipping the tipping body (11) from a normal driving position into a raised tipping position about a tipping axis (13), **characterised by** an orientation sensor arrangement (23), which is connected in a signal-transmitting manner to the control device (17), for detecting the longitudinal orientation of the tractor unit (3) relative to the longitudinal orientation of the semitrailer (5), the control device (17) being designed, depending on the signalling state of the orientation sensor arrangement (23), to emit a warning signal and/or to limit the tipping possibilities of the tipping body (11).

2. Tipping vehicle according to claim 1, **characterised in that** a sensor arrangement, which is connected in a signal-transmitting manner to the control device (17), is provided for detecting and signalling a lateral inclination of the tipping vehicle, the control device (17) being designed to limit the tipping possibilities of the tipping body (11) depending on the signalling state of the sensor arrangement.

3. Tipping vehicle according to claim 2, **characterised in that** the control device (17) is designed to prevent the tipping body (11) tipping in the direction of the raised tipping position when the sensor arrangement signals that a limit value of the lateral inclination of the tipping vehicle has been exceeded.

4. Tipping vehicle according to either claim 2 or claim 3, **characterised in that** the control device (17) is designed, during a tipping process about the tipping axis (13), to limit, continuously or in stages, the tipping angle of the tipping body relative to the normal driving position to a greater extent the larger the lateral inclination of the tipping vehicle signalled by the sensor arrangement is.

5. Tipping vehicle according to any of claims 2 to 4, **characterised in that** the vehicle comprises an electronic brake system EBS having a roll stability support system RSS, which is designed to counteract a lateral tipping of the tipping vehicle during driving by means of controlled braking, the sensor arrangement comprising RSS sensors.

6. Tipping vehicle according to any of claims 2 to 5, **characterised in that** the tipping mechanism comprises a solenoid valve for lifting and lowering control of the tipping body and **in that** the control device (17) is designed to control the solenoid valve depending on the signalling state of the sensor arrangement.

7. Tipping vehicle according to any of the preceding claims, **characterised in that** the control device (17) is designed to prevent the tipping body (11) tipping in the direction of the raised tipping position when the orientation sensor arrangement (23) signals that a limit value of an angle (13) between a longitudinal axis (21) of the tractor unit (3) and a longitudinal axis (19) of the trailer (5) has been exceeded.

8. Tipping vehicle according to any of the preceding claims, **characterised in that** the control device (17) is designed, during a tipping process about the tipping axis (13), to limit, continuously or in stages, the tipping angle of the tipping body (11) relative to the normal driving position to a greater extent the larger the angle between the longitudinal axis (21) of the tractor unit (3) and the longitudinal axis (19) of the trailer (5) that is signalled by the orientation sensor arrangement (23).

9. Tipping vehicle according to any of the preceding claims, **characterised in that** the vehicle has an on-board display, which can be controlled by means of the control device (17), in particular for visually representing positional states of the vehicle, such as a lateral inclination of the tipping vehicle, a forwards and backwards inclination of the tipping vehicle, and the angle between the longitudinal axis of the tractor unit and the longitudinal axis of the trailer for a tipping tractor-trailer.

## Revendications

1. Véhicule à benne basculante en tant que véhicule articulé, composé d'un tracteur routier (3) et d'une semi-remorque (5), qui comprend un pont basculant (11) et un mécanisme de basculement, pouvant être commandé au moyen d'un dispositif de commande (17), servant à faire basculer de manière réversible le pont basculant (11) depuis une position de base en déplacement dans une position de basculement relevée autour d'un axe de basculement (13), **caractérisé par** un ensemble de capteurs d'orientation (23), relié par transmission de signaux au dispositif de commande (17), servant à détecter l'orientation longitudinale du tracteur routier (3) par rapport à l'orientation longitudinale de la remorque (5), dans lequel le dispositif de commande (17) est conçu pour émettre en fonction de l'état de signalisation de l'ensemble de capteurs d'orientation (23) un signal d'avertissement et/ou pour limiter les possibilités de basculement du pont basculant (11).

2. Véhicule à benne basculante selon la revendication 1, **caractérisé en ce qu'**un ensemble de capteurs relié par transmission de signaux au dispositif de commande (17) est prévu pour détecter et signaler une inclinaison latérale du véhicule à benne basculante, dans lequel le dispositif de commande (17) est conçu pour limiter les possibilités de basculement du pont basculant (11) en fonction de l'état de signalisation de l'ensemble de capteurs.

3. Véhicule à benne basculante selon la revendication 2, **caractérisé en ce que** le dispositif de commande (17) est conçu pour empêcher le basculement du pont basculant (11) en direction de la position de basculement relevée quand l'ensemble de capteurs signale le dépassement d'une valeur limite de l'inclinaison latérale du véhicule à benne basculante.

4. Véhicule à benne basculante selon la revendication 2 ou 3, **caractérisé en ce que** le dispositif de commande (17) est conçu pour limiter, en continu ou par étapes, lors d'une opération de basculement autour de l'axe de basculement (13), l'angle de basculement du pont basculant par rapport à la position de base en déplacement de manière d'autant plus importante que l'inclinaison latérale, signalée par l'ensemble de capteurs, du véhicule à benne basculante est importante.

5. Véhicule à benne basculante selon l'une quelconque des revendications 2 à 4, **caractérisé en ce qu'**il comprend un système de freinage électronique EBS avec un système d'assistance contre le renversement RSS, qui est conçu pour contrecarrer au cours du déplacement un basculement latéral du véhicule à benne basculante par un freinage commandé, dans lequel l'ensemble de capteurs comprend des capteurs du RSS.

6. Véhicule à benne basculante selon l'une quelconque des revendications 2 à 5, **caractérisé en ce que** le mécanisme de basculement comprend une électrovanne pour la commande de levage et d'abaissement du pont basculant, et que le dispositif de commande (17) est conçu pour piloter l'électrovanne en fonction de l'état de signalisation de l'ensemble de capteurs.

7. Véhicule à benne basculante selon l'une quelconque des revendications précédentes, **caractérisé en ce que** le dispositif de commande (17) est conçu pour empêcher le basculement du pont basculant (11) en direction de la position de basculement relevée quand l'ensemble de capteurs d'orientation (23) signale le dépassement d'une valeur limite d'un angle (13) entre l'axe longitudinal (21) du tracteur routier (3) et un axe longitudinal (19) de la remorque (5).

8. Véhicule à benne basculante selon l'une quelconque des revendications précédentes, **caractérisé en ce que** le dispositif de commande (17) est conçu pour limiter, en continu ou par étapes, lors d'une opération de basculement autour de l'axe de basculement (13), l'angle de basculement du pont basculant (11) par rapport à la position de base en déplacement de manière d'autant plus importante que l'angle signalé par l'ensemble de capteurs d'orientation (23) entre l'axe longitudinal (21) du tracteur routier (3) et l'axe longitudinal (19) de la remorque (5) est important.

9. Véhicule à benne basculante selon l'une quelconque des revendications précédentes, **caractérisé en ce qu'**il un système d'affichage embarqué pouvant être commandé au moyen d'un dispositif de commande (17), servant à représenter en particulier de manière imagée des états de position de véhicule, tels qu'une inclinaison latérale du véhicule à benne basculante, une inclinaison vers l'avant-vers l'arrière du véhicule à benne basculante, des angles entre l'axe longitudinal du tracteur routier et l'axe longitudinal de la remorque pour un train routier à benne basculante.
